Europäisches Patentamt

European Patent Office

Office européen des brevets

(19)

(11) Veröffentlichungsnummer: **0 295 748 B1**

(12) # EUROPÄISCHE PATENTSCHRIFT

(45) Veröffentlichungstag der Patentschrift: **07.10.92**

(51) Int. Cl.⁵: **C03B 37/012**

(21) Anmeldenummer: **88201198.4**

(22) Anmeldetag: **10.06.88**

(54) **Verfahren zur Herstellung von Lichtleitfasern.**

(30) Priorität: **16.06.87 DE 3720028**

(43) Veröffentlichungstag der Anmeldung:
**21.12.88 Patentblatt 88/51**

(45) Bekanntmachung des Hinweises auf die
Patenterteilung:
**07.10.92 Patentblatt 92/41**

(84) Benannte Vertragsstaaten:
**DE FR GB**

(56) Entgegenhaltungen:
**EP-A- 0 264 154**
**WO-A-80/00440**
**GB-A- 2 079 267**
**US-A- 3 980 459**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Bachmann, Peter, Dr.
Karlstrasse 55
W-5100 Aachen(DE)**
Erfinder: **Hagemann, Hans-Jürgen, Dr.
Arndstrasse 23
W-5100 Aachen(DE)**
Erfinder: **Warnier, Jacques
M.L. Kingstrasse 18
NL-6245 GJ Eijsden(NL)**
Erfinder: **Wilson, Howard
Königsberger Strasse 32
W-5100 Aachen(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

**Beschreibung**

Die Erfindung betrifft ein Verfahren zur Herstellung von Lichtleitfasern, bei dem auf der Innenwandung eines auf eine Temperatur zwischen 1100 und 1300°C erwärmten Glasrohrs und zugleich auf einem Glasstab, der im Inneren des Glasrohrs angeordnet ist, schichtweise Glas abgeschieden wird, indem ein reaktives Gasgemisch bei einem Druck zwischen 1 und 30 hPa durch das Glasrohr geleitet wird, während im Inneren des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden.

Unter einem Glasrohr und einem Glasstab sind in diesem Zusammenhang ein Substratrohr oder Beschichtungsrohr und ein Stab zu verstehen, die entweder aus synthetisch hergestelltem oder aus aus Quarzkristallen durch Schmelzen hergestelltem amorphem Quarz (Schmelzkieselsäure, Quarzglas) bestehen, wobei das Rohrmaterial gegebenenfalls dotiert ist, oder die sowohl aus synthetisch hergestelltem als auch aus aus Quarzkristallen durch Schmelzen hergestelltem amorphem Quarz (Schmelzkieselsäure, Quarzglas) bestehen, wobei das Rohrmaterial gegebenenfalls dotiert ist. Das abgeschiedene Glas besteht aus synthetisch hergestelltem amorphem Quarz, der gegebenenfalls dotiert ist.

Die Herstellung von Lichtleitfasern bzw. optischen Wellenleitern nach dem zuvor angegebenen Verfahren ist u.a. aus US-E-30 635 und US-A-4 314 833 bekannt, wobei die Verfahrensabwandlung, bei der die Glasabscheidung zugleich auf einem Glasstab erfolgt, der im Inneren des Glasrohrs angeordnet ist, aus US-E-30 635 bekannt ist. Die Herstellungsweise ohne diese Verfahrensabwandlung wird in der Praxis als "nichtisothermes Plasma-CVD-Verfahren" (nichtisothermes PCVD-Verfahren, wobei P = Plasma und CVD = Chemical Vapour Deposition = reaktive Abscheidung aus der Gasphase) bezeichnet. Bei diesem Verfahren werden aus der Gasphase Glasschichten direkt auf der Innenwandung des Glasrohrs abgeschieden (heterogene Reaktion). Hierbei wird die Bildung von Glasruß in der Gasphase vermieden; dies ist insbesondere in US-A-4 314 833 näher beschrieben.

Mit dem PCVD-Verfahren sind sowohl Gradientenindexfasern als auch Stufenindexfasern herstellbar, wobei dem jeweiligen Faseraufbau entsprechende Mengen Glas abgeschieden werden.

Monomoden-Lichtleitfasern mit radialsymmetrischen Brechungsindexprofilen können die beiden orthogonal polarisierten $HE_{11}$-Moden übertragen. Durch quasi-statistisch verteilte interne und externe Störungen koppeln die beiden Moden ineinander über, so daß eine Lichtübertragung, bei der die Polarisationsrichtung erhalten bleibt, mit diesen Fasern nicht möglich ist. Polarisationserhaltende Lichtleitfasern sind jedoch für Anwendungen in der Interferometrie, in kohärenten optischen Kommunikationssystemen, in der nichtlinearen Optik usw. von großem Interesse. Es ist bekannt, daß solche Fasern durch nichtradialsymmetrische Brechzahlprofile verwirklicht werden können, und zwar mit elliptischen oder anders unrunden Faserkernen (z.B. EP-B-O O47 037, US-A-4 106 847) oder durch spannungsinduzierte Doppelbrechung im Kern durch einen nichtkreisförmigen, spannungserzeugenden optischen Mantel (z.B. US-A-4 274 854). Zahlreiche mögliche Strukturen für polarisationserhaltende Fasern und Methoden, um solche Strukturen herzustellen, sind u.a. von R.H. Stolen et al. (Electron. Lett. 18 (1982) 764 - 765), T. Hosaka (Elektron. Lett. 17 (1981) 530 - 531, R.D. Birch et al. (Elektron. Lett. 18 (1982) 1036 - 1038) und S.C. Rashleigh und R.H. Stolen (Fiberoptic Techn. (May 1983) 155 - 161) beschrieben worden. Soweit es sich um Innenbeschichtungsverfahren handelt, beruhen alle bekannten Herstellungsverfahren auf mechanischen Bearbeitungen des Substratrohrs (z.B. Abschleifen oder Polieren), auf Verformung beim Kollabieren durch Anwendung von Unterdruck oder auf chemischer Ätzung (z.B. Gasphasenätzen oder Étzen in Verbindung mit photolithographischen Mitteln). In allen Fällen besteht der Nachteil, daß in den üblichen Verfahrensablauf der Faserherstellung eingegriffen werden muß, wobei Verunreinigungen eingebracht werden oder Rißprobleme bei der Vorform entstehen, oder die erwünschten geometrischen und optischen Profile nur schwer reproduzierbar hergestellt werden können.

Aufgabe der Erfindung ist es, ein Verfahren anzugeben, mit dem die Herstellung von polarisationserhaltenden Lichtleitfasern mit dem PCVD-Verfahren ermöglicht wird.

Diese Aufgabe wird erfindungsgemäß dadurch gelöst, daß bei einem Verfahren der eingangs genannten Art mindestens zwei Glasstäbe derart im Inneren des Glasrohrs angeordnet werden, daß ihre Längsachsen parallel zur Längsachse des Glasrohrs verlaufen, und daß die Glasstäbe nach Beendigung der Glasabscheidung aus dem Glasrohr entfernt werden.

Eine andere erfindungsgemäße Lösung der zuvor genannten Aufgabe besteht darin, daß bei einem Verfahren der eingangs genannten Art als Glasstab ein solcher gewählt wird, dessen radiale Abmessungen in zwei zueinander senkrechten Richtungen in einem von eins abweichenden Verhältnis stehen, daß der Glasstab derart angeordnet wird, daß seine Längsachse mit der Längsachse des Glasrohrs zusammenfällt, und daß der Glasstab nach Beendigung der Glasabscheidung aus dem Glasrohr entfernt wird.

Beim erstgenannten erfindungsgemäßen Verfahren werden vorzugsweise mindestens zwei Glasstäbe mit kreisförmigem Querschnitt im Inneren des Glasrohrs angeordnet. Diese Querschnittsform hat den Vorteil, daß Glasstäbe mit ausreichender Steifigkeit aus geeignetem Quarzmaterial leicht erhältlich sind.

Ferner ist es beim erstgenannten erfindungsgemäßen Verfahren von Vorteil, die Stabdurchmesser so zu wählen, daß ihr Verhältnis zum Innendurchmesser des Glasrohrs zwischen 0,2 und 0,7 beträgt. Dadurch wird nämlich erreicht, daß die Abhängigkeit der Schichtdicke der abgeschiedenen Schicht vom Winkel das gewünschte Ausmaß erreicht.

Beim zweitgenannten erfindungsgemäßen Verfahren wird als Glasstab vorzugsweise ein solcher gewählt, dessen radiale Abmessungen in zwei zueinander senkrechten Richtungen in einem Verhältnis von 1 : 1,5 bis 1 : 4 stehen. Dieses Abmessungsverhältnis hat den Vorteil, daß die gewünschte Abhängigkeit der Schichtdicke der abgeschiedenen Schicht erreicht werden kann, ohne daß es bei der Abscheidung zu Bedingungen kommt, die für das PCVD-Verfahren nicht geeignet sind.

Die Möglichkeit, im Substratrohr mit Hilfe eines Mikrowellenresonators ein Niederdruckplasma zu erzeugen, wird durch die Anwesenheit der Glasstäbe im Rohr nicht beeinträchtigt. Vielmehr findet eine Abscheidung von dotiertem oder undotiertem Quarzglas sowohl auf der Innenwand des Substratrohrs als auch auf dem Umfang der Stäbe statt, die sich im Inneren des Rohres befinden.

Um die Abscheidung zu bewerkstelligen, wird ein reaktives Gasgemisch aus $O_2$, $SiCl_4$ und gasförmigen Dotierungsmitteln wie z.B. $GeCl_4$ oder $C_2F_6$ bei einem Druck zwischen 500 und 2500 Pa durch die Rohr-Stab-Kombination geleitet, während im glasfreien Innenraum zwischen dem Rohr und dem Stab ein Plasma zwischen zwei Umkehrpunkten periodisch hin und her bewegt wird. Die Rohr-Stab-Kombination wird während der Beschichtung auf eine Temperatur zwischen 1300 und 1600 K erhitzt.

Nachdem auf diese Art schichtweise Glas entsprechend dem beabsichtigten Lichtleitfaseraufbau abgeschieden worden ist, werden der Stab oder die Stäbe aus dem Substratrohr entfernt und das Rohr alleine wird zu einer massiven Vorform kollabiert, von der eine Lichtleitfaser gezogen wird.

Mit dem erfindungsgemäßen Verfahren sind Fasern mit jedem gewünschten Verlauf des Brechungsindex herstellbar, z.B. Gradientenindex- und Stufenindexfasern mit Profilen, die eine vorgegebene Winkelabhängigkeit des Brechungsindex besitzen.

Beim erfindungsgemäßen Verfahren werden Rohr/Stab-Kombinationen benutzt, um in einfacher Weise mit Hilfe des PCVD-Verfahrens Glasschichten auf der Innenwandung des Substratrohrs abzuscheiden, deren Schichtdicke längs des Umfangs des Rohres unterschiedlich ist.

Bei der Abscheidung von Glas nach dem PCVD-Verfahren wird durch die erfindungsgemäßen Stabanordnungen erreicht, daß die Dicke der abgeschiedenen Schichten mit einer Periode von 180° längs des Umfangs des Substratrohrs variiert.

Es wird zunächst das Mantelglas und dann das Kernglas abgeschieden. Die Schichtdicken und die Dotierungen werden dabei so gewählt, daß später eine Monomoden-Lichtleitfaser aus der Vorform hergestellt werden kann. Zur optimalen Erfüllung der erfindungsgemäßen Aufgabe soll die Brechungsindexdifferenz $\Delta n$ zwischen Kern und Mantel möglichst groß sein. Vorzugsweise wird $\Delta n$ auf Werte zwischen $7{,}5 \times 10^{-3}$ und $1{,}5 \times 10^{-2}$ eingestellt, was z.B. durch $GeO_2$-Dotierung im Kernbereich und durch einen undotierten, F-, oder B-dotierten Mantel erfolgen kann.

Nach der Beschichtung werden die Stäbe oder der Stab aus dem Substratrohr entfernt, und nach dem Kollabieren erhält man eine Vorform mit einem elliptischen Kern und einem elliptischen optischen Mantel mit großen Exentizitäten, die beim Ziehen der Lichtleitfaser erhalten bleiben.

Die elliptische Form des Kerns gibt Anlaß zu geometrischer Doppelbrechung $B_g$ und damit zu Polarisationserhaltung in der Monomoden-Lichtleitfaser:

$$B_g \sim (\Delta n)^2 \sqrt{1-(b/a)^2} \qquad (1)$$

    $a$ =     große Halbachse der Kernellispe
    $b$ =     kleine Halbachse der Kernellipse

Wenn ein Mantelglas abgeschieden wird, dessen Dotierung sich von der des Glasrohrs unterscheidet, so daß der optische Mantel und das äußere Substrat aus unterschiedlich dotiertem Glas bestehen, tritt zusätzlich zur geometrischen Doppelbrechung noch eine Spannungsdoppelbrechung $B_s$ auf, die die polarisationserhaltende Eigenschaft des erfindungsgemäß hergestellten Fasertyps noch weiter erhöht:

$$B_s \sim (P_{11}-P_{12}) \, \Delta \alpha \, \Delta T (A-B)/A+B \qquad (2)$$

    $P_{11}, P_{12}$ =     Spannungsoptische Koeffizienten
    $\Delta \alpha$ =     Differenz der thermischen Ausdehnungskoeffizienten von optischem Mantel und Substratmantel
    $\Delta T$ =     Differenz zwischen Erweichungs-

A =  temperatur und Raumtemperatur große Halbachse der Mantelellipse

B =  kleine Halbachse der Mantelellipse

Die Spannungsdoppelbrechung ist besonders ausgeprägt, wenn in einer Ausführungsform der Erfindung B-dotiertes Glas als optischer Mantel abgeschieden wird.

Die Erfindung wird nachstehend anhand einer Zeichnung und eines Ausführungsbeispiels näher erläutert.

In der Zeichnung zeigen

Fig. 1 eine Anordnung von zwei Glasstäben in einem Glasrohr im Querschnitt,

Fig. 2 die Winkelabhängigkeit der Dicke der abgeschiedenen Schicht in einem Diagramm und

Fig. 3 eine Vorform im Querschnitt.

Im Ausführungsbeispiel wurden mit dem PCVD-Verfahren Vorformen mit einem Stufenindexprofil hergestellt. Die Resonatorgeschwindigkeit betrug 12 cm/s auf einer Hublänge von 80 cm. An den Endpunkten wurde der Resonator über eine Länge von etwa 1 cm auf die Geschwindigkeit Null verzögert und in umgekehrter Richtung wieder auf 12 cm/s beschleunigt. Das Verhältnis des $O_2$-Flusses zum Chloridfluß ($SiCl_4$ und $GeCl_4$) betrug 5:1. Der Druck während der Abscheidung wurde auf 1800 Pa eingestellt und die Substrattemperatur betrug 1500 K. Die Vorformen wurden nach der Abscheidung kollabiert und bezüglich der Geometrie des abgeschiedenen Materials und der Brechungsindexdifferenz zwischen dem abgeschiedenen Material und dem $SiO_2$-Substratrohr vermessen.

Zum Nachweis der Erfüllung der erfindungsgemäßen Aufgabe, polarisationserhaltende Fasern mit dem PCVD-Verfahren herzustellen, wurde experimentell gezeigt, daß durch die Anwesenheit von 2 Quarzstäben im Substratrohr während der Beschichtung eine Massenbelegung mit abgeschiedenem Glas erreicht wird, die längs des Umfangs des Substratrohrs stark variiert. Alles weitere, wie die Herstellung bestimmter Brechungsindex- und Spannungsprofile, ist dann Stand der Technik.

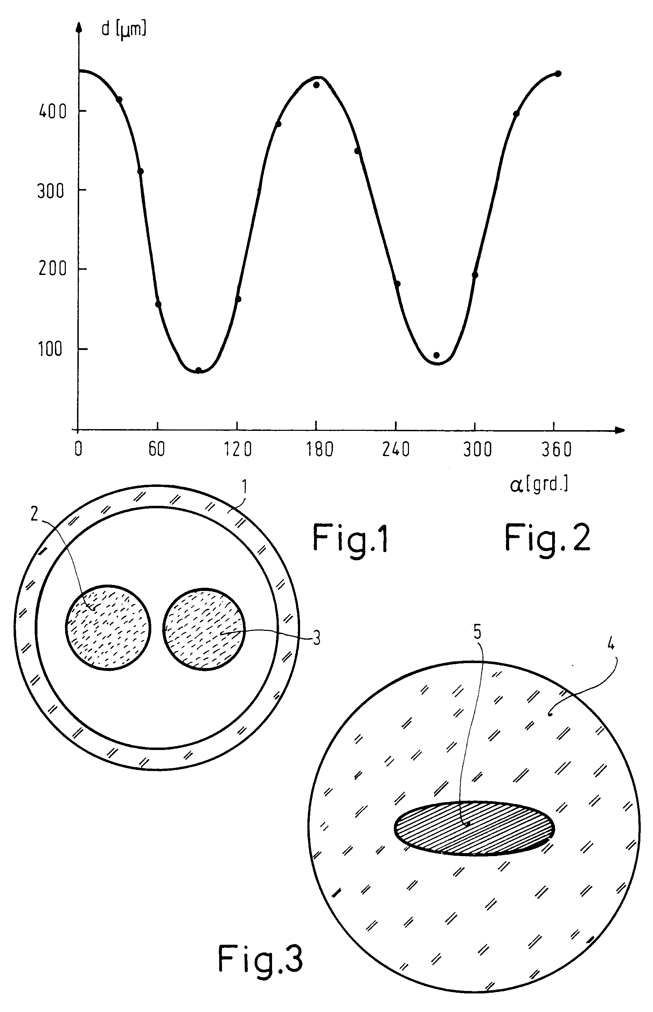

Die PCVD-Abscheidung wurde in einem Substratrohr 1 von 15 mm Innendurchmesser (1,5 mm Wandstärke) mit zwei Quarzstäben 2, 3 von je 5 mm Durchmesser durchgeführt (vgl. Fig. 1). Die Achsen der Quarzstäbe waren parallel zur Substratrohrachse und ihre Mittelachsen waren 3 mm von der Mittelachse des Substratrohres entfernt. Die Beschichtung wurde mit einem $SiCl_4$-Fluß von 170 sccm, einem $GeCl_4$-Fluß von 15 sccm, einem $O_2$-Fluß von 935 sccm und einer Mikrowellenleistung von 800 W durchgeführt. Dabei bedeutet sccm Kubikzentimeter pro Minute, bezogen auf Standardbedingungen (273 K, 1013 hPa). Die Wandstärke des Rohres wurde vor und nach der Beschichtung als Funktion des Kreiswinkels $\alpha$ vermessen. Aus der Differenz ergab sich die Winkelabhängigkeit der Dicke d der abgeschiedenen Schicht (Fig. 2). Die Schichtdicke war bei einer totalen Hublänge von 80 cm über einer Länge von 77 cm nicht von der Position längs der Achse des Rohres abhängig. Durch den Einfluß der Stäbe variiert die Schichtdicke mit einer Periode von 180° zwischen 75 $\mu$m und 450 $\mu$m (Fig. 2).

Nach dem Entfernen der Stäbe wurde die Vorform kollabiert. Danach wurde das Brechungsindexprofil als Funktion des Kreiswinkels vermessen: Der äußere Querschnitt 4 der Vorform war kreisförmig mit einem Durchmesser von 10,5 mm und das abgeschiedene $GeO_2$-dotierte Quarzglas 5 hatte einen nichtkreisförmigen Querschitt mit einer großen Halbachse von 2,6 mm und einer kleinen Halbachse von 1,1 mm (vgl. Fig. 3). Es ergab sich also eine numerische Exzentrizität von etwa 0,9, was bei der PCVD-Abscheidung von Kern- und Mantelbereichen mit dem erfindungsgemäßen Verfahren zu ausgeprägter geometrischer und spannungsinduzierter Doppelbrechung führt. Es ist bekannt, daß bei Exzentrizitäten des Kerns und des optischen Mantels von 0,9 Lichtleitfasern entstehen, die ausgezeichnete polarisationserhaltende Eigenschaften haben.

## Patentansprüche

1. Verfahren zur Herstellung von Lichtleitfasern, bei dem auf der Innenwandung eines auf eine Temperatur zwischen 1100 und 1300°C erwärmten Glasrohrs und zugleich auf einem Glasstab, der im Inneren des Glasrohrs angeordnet ist, schichtweise Glas abgeschieden wird, indem ein reaktives Gasgemisch bei einem Druck zwischen 1 und 30 hPa durch das Glasrohr geleitet wird, während im Inneren des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden,
dadurch gekennzeichnet, daß mindestens zwei Glasstäbe derart im Inneren des Glasrohrs angeordnet werden, daß ihre Längsachsen parallel zur Längsachse des Glasrohrs verlaufen, und daß die Glasstäbe nach Beendigung der Glasabscheidung aus dem Glasrohr entfernt werden.

2. Verfahren zur Herstellung von Lichtleitfasern, bei dem auf der Innenwandung eines auf eine Temperatur zwischen 1100 und 1300°C erwärmten Glasrohrs und zugleich auf einem Glasstab, der im Inneren des Glasrohrs angeordnet ist, schichtweise Glas abgeschieden wird, indem ein reaktives Gasgemisch bei einem Druck zwischen 1 und 30 hPa durch das Glasrohr geleitet wird, während im Inneren des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden,
dadurch gekennzeichnet, daß als Glasstab ein solcher gewählt wird, dessen radiale Abmessungen in zwei zueinander senkrechten Richtungen in einem von eins abweichenden Verhältnis stehen, daß der Glasstab derart angeordnet wird, daß seine Längsachse mit der Längsachse des Glasrohrs zusammenfällt, und daß der Glasstab nach Beendigung der Glasabscheidung aus dem Glasrohr entfernt wird.

3. Verfahren nach Anspruch 1,
dadurch gekennzeichnet, daß mindestens zwei Glasstäbe mit kreisförmigem Querschnitt im Inneren des Glasrohrs angeordnet werden.

4. Verfahren nach Anspruch 3,
dadurch gekennzeichnet, daß die Stabdurchmesser so gewählt werden, daß ihr Verhältnis zum Innendurchmesser des Glasrohrs zwischen 0,2 und 0,7 beträgt.

5. Verfahren nach Anspruch 2,
dadurch gekennzeichnet, daß als Glasstab ein solcher gewählt wird, dessen radiale Abmessungen in zwei zueinander senkrechten Richtungen in einem Verhältnis von 1 : 1,5 bis 1 : 4 stehen.

6. Verfahren nach Anspruch 1 oder 2,
dadurch gekennzeichnet, daß zunächst Mantelglas und dann Kernglas abgeschieden wird, wobei die Brechungsindexdifferenz zwischen Kern und Mantel auf Werte zwischen 7,8 x 10⁻³ und 1,5 x 10⁻² eingestellt wird.

7. Verfahren nach Anspruch 1 oder 2,
dadurch gekennzeichnet, daß ein Mantelglas abgeschieden wird, dessen Dotierung sich von der des Glasrohrs unterscheidet.

8. Verfahren nach Anspruch 7,
dadurch gekennzeichnet, daß bordotiertes Glas als Mantelglas abgeschieden wird.

**Claims**

1. A method of manufacturing optical fibres, in which metal glass is deposited in layers on the inner wall of a glass tube which is heated to a temperature between 1100 and 1300°C, and simultaneously on glass rod which is arranged inside the glass tube, by leading a reactive gas mixture through the glass tube at a pressure between 1 and 30 hPa, while inside the glass tube a plasma is reciprocated strokewise between two reversal points, after which the glass tube is made to collapse, following the deposition of a quantity of glass which corresponds to the intended construction of the optical fibre, so as to form a solid preform from which optical fibres are drawn, characterized in that at least two glass rods are arranged inside the glass tube in such a way that their longitudinal axes run parallel to the longitudinal axis of the glass tube, and that the glass rods are removed from the glass tube upon completion of the glass deposition.

2. A method of manufacturing optical fibres, in which glass is deposited in layers on the inner wall of a glass tube which is heated to a temperature between 1100 and 1300°C, and simultaneously on a glass rod which is arranged inside the glass tube, by leading a reactive gas mixture through the glass tube at a pressure between 1 and 30 hPa, while inside the glass tube a plasma is reciprocated strokewise between two reversal points, after which the glass tube is made to collapse, following the deposition of a quantity of glass which corresponds to the intended construction of the optical fibre, so as to form a solid preform from which optical fibres are drawn, characterized in that a glass rod is selected, the radial dimensions of which in two mutually perpendicular directions are in a ratio unequal to one, in that the glass rod is arranged in such a way that its longitudinal axis coincides with the longitudinal axis of the glass tube, and in that the glass rod is removed from the glass tube upon completion of the glass deposition process.

3. A method as claimed in Claim 1, characterized in that at least two glass rods having a circular cross-section are arranged inside the glass tube.

4. A method as claimed in Claim 3, characterized in that the rod diameters are selected such that the ratio between the rod diameters and the inside diameter of the glass tube is between 0.2 and 0.7.

5. A method as claimed in Claim 2, characterized in that a glass rod is selected, the radial dimensions of which in two mutually perpendicular directions are in a ratio from 1 : 1.5 to 1 : 4.

6. A method as claimed in Claim 1 or 2, characterized in that first cladding glass is deposited and then core glass is deposited, the refractive index difference between core and cladding being adjusted to values between $7.8 \times 10^{-3}$ and $1.5 \times 10^{-2}$.

7. A method as claimed in Claim 1 or 2, characterized in at a cladding glass is deposited, the doping of which differs from that of the glass tube.

8. A method as claimed in Claim 7, characterized in that boron-doped glass is deposited as the cladding glass.

## Revendications

1. Procédé de fabrication de fibres optiques, suivant lequel on dépose du verre en couche sur la paroi interne d'un tube en verre chauffé à une température comprise entre 1100 et 1300°C et, en même temps, sur une baguette de verre qui est disposée à l'intérieur du tube en verre en faisant passer un mélange de gaz réactifs dans le tube en verre sous une pression comprise entre 1 et 30 hPa, tandis qu'à l'intérieur du tube en verre, un plasma est animé d'une course de va-et-vient entre deux points d'inversion, après quoi, lorsqu'une quantité de verre correspondant à la structure de la fibre optique envisagée a été déposée, on provoque l'affaissement du tube en verre, pour former une ébauche massive à partir de laquelle sont étirées des fibres optiques, caractérisé en ce qu'on dispose au moins deux baguettes de verre à l'intérieur du tube en verre d'une manière telle que leurs axes longitudinaux soient parallèles à l'axe longitudinal du tube en verre et on retire les baguettes de verre du tube en verre au terme du dépôt de verre.

2. Procédé de fabrication de fibres optiques, suivant lequel on dépose du verre en couche sur la paroi interne d'un tube en verre chauffé à une température comprise entre 1100 et 1300°C et, en même temps, sur une baguette de verre qui est disposée à l'intérieur du tube en verre en faisant passer un mélange de gaz réactifs dans le tube en verre sous une pression comprise entre 1 et 30 hPa, tandis qu'à l'intérieur du tube en verre, un plasma est animé d'une course de va-et-vient entre deux points d'inversion, après quoi, lorsqu'une quantité de verre correspondant à la structure de la fibre de verre envisagée a été déposée, on provoque l'affaissement du tube en verre, pour former une ébauche massive à partir de laquelle sont étirées des fibres optiques, caractérisé en ce qu'on choisit, comme baguette de verre, une baguette dont les dimensions radiales, dans deux sens mutuellement perpendiculaires, sont dans un rapport différent de un, que l'on dispose la baguette de verre d'une manière telle que son axe longitudinal coïncide avec l'axe longitudinal du tube en verre et que l'on retire la baguette de verre du tube en verre au terme du dépôt de verre.

3. Procédé suivant la revendication 1, caractérisé en ce qu'on dispose au moins deux baguettes de verre de section transversale circulaire à l'intérieur du tube en verre.

4. Procédé suivant la revendication 3, caractérisé en ce qu'on choisit les diamètres des baguettes de telle sorte que leur rapport au diamètre intérieur du tube en verte soit compris entre 0,2 et 0,7.

5. Procédé suivant la revendication 2, caractérisé en ce qu'on choisit, comme baguette de verte, une baguette dont les dimensions radiales, dans deux sens mutuellement perpendiculaires, sont dans le rapport de 1:1,5 à 1:4.

6. Procédé suivant la revendication 1 ou 2, caractérisé en ce qu'on dépose d'abord le verre de gaine, puis le verre de coeur, la différence d'indice de réfraction entre le coeur et la gaine étant réglée sur des valeurs comprises entre $7,8 \times 10^{-3}$ et $1,5 \times 10^{-2}$

7. Procédé suivant la revendication 1 ou 2, caractérisé en ce qu'on dépose un verre de gaine dont le dopage est différent de celui du tube en verre.

8. Procédé suivant la revendication 7, caractérisé en ce qu'on dépose, en tant que verre de gaine, du verre dopé au bore.

Fig.1  Fig.2

Fig.3